# DEMANDE DE BREVET EUROPEEN

(11) **EP 3 367 335 A1**
(43) Date de publication de la demande: **29.08.2018**
(21) Numéro de dépôt: 18315001.0
(22) Date de dépôt: 21.02.2018
(51) Int. Cl.: G06T 7/593

(54) **DISPOSITIF ET PROCÉDÉ POUR LA NUMÉRISATION 3D SANS CONTACT D'UN OBJET**

(30) Priorité: 21.02.2017 FR 1770168
(71) Demandeur: YVI-Labs, 78000 Versailles (FR)
(72) Inventeur: Viellard, Yann, 78000 Versailles (FR)

(57) **Abrégé**

Le dispositif est une surface plane (2) d'au moins deux couleurs différentes représentant un motif prédéfini (4). L'objet à numériser (1) en 3D est posé sur cette surface plane puis plusieurs images de l'objet sont prises selon différents points de vue (3). Le procédé permet de mesurer les coordonnées et les couleurs respectives d'un ensemble de points distincts à la surface de l'objet. Les domaines techniques concernés est la photogrammétrie. La surface plane (2) permet, par différence chromatique, de distinguer dans une image, l'objet posé (1) sur cette surface de la surface en elle-même et donc d'obtenir sa silhouette. Le motif (4) formé par les deux teintes chromatiques de cette surface permet de calculer la position précise de la caméra par rapport à la surface plane.

## Description

La présente invention concerne un procédé pour la numérisation (scanner) 3D sans contact d'un objet et un dispositif permettant de situer dans l'espace la zone où se trouve l'objet à numériser par rapport à un appareil de prise d'image. Le dispositif est une surface plane d'au moins deux couleurs différentes représentant un motif prédéfini. L'objet à numériser en 3D est posé sur cette surface plane puis un ensemble d'images de l'objet sont prises selon différents points de vue. Le procédé permet de mesurer les coordonnées et les couleurs respectives d'un ensemble de points distincts à la surface de l'objet à numériser. Les domaines techniques concernés sont ceux de la métrologie 3D et de la photogrammétrie.

L'analyse de l'état de l'art concernant la numérisation d'objet 3D à partir d'image fait apparaître deux approches techniques différentes à savoir : la reconstitution en se basant seulement sur l'ensemble d'images de l'objet sans autre dispositif et l'autre se basant sur des dispositifs de projection de motifs prédéfinis sur l'objet afin de mesurer la distance par rapport à la caméra ayant pris les images.

Dans le cas de la technique de scanner 3D utilisant une projection de motif prédéfini sur l'objet, les systèmes les plus utilisés sont la projection d'un rayon laser ponctuel ou en ligne pour le scanner laser, la projection d'un motif invisible dans le domaine de l'infrarouge ou encore la projection d'une image dans le domaine visible, technique dite du scanner à lumière structurée. Les scanners tridimensionnels dits « à lumière structurée » sont une famille spécifique de scanners tridimensionnels sans contact. Ces scanners sont constitués d'un projecteur de lumière, généralement réalisé sur le principe d'un vidéo-projecteur ou constitué d'un système laser générant des franges d'interférences (pour la technique dite du « phase-shifting »), et d'au moins une caméra décalée géométriquement par rapport au projecteur afin de réaliser une configuration stéréoscopique. Le projecteur projette un motif lumineux dit « structuré », à une ou deux dimensions géométriques (par exemple une ligne ou une image) et éventuellement coloré, sur la surface à mesurer. La caméra, positionnée à une distance du projecteur appelée « base stéréoscopique », acquière et enregistre une image de la scène. Les coordonnées des points de la surface de l'objet sont déduits par la déformation géométrique du motif lumineux projeté.

Parmi les brevets traitant des méthodes, procédés et dispositifs de scanner 3D à projection de motif lumineux ou infrarouge, on relève essentiellement : - les systèmes par projection d'un laser sur la surface de l'objet. Ce procédé est décrit dans des demandes de brevet tel que la demande "Auto-referenced system and apparatus for three-dimensional scanning" (demande n° EP 2 230 482 A1), la demande de brevet "3D coarse laser scanner" (demande de brevet international n° WO 2015/165608 A1) ou encore la demande de brevet "3D laser scanner" (demande n°WO 2015/165663 A1)
- les systèmes de scanner à lumière structurée. Ce procédé est décrit dans des demandes de brevet tel que la demande de brevet "Three-dimensional coordinate scanner and method of operation" (demande n° WO 2015/094525 A1), la demande de brevet "Three-dimensional scanner for hand-head phones" (demande n°WO 2015/151173 A1), ou plus récemment la demande de brevet "Projecteur de lumière structurée et scanner tridimensionnel comportant un tel projecteur" (demande n°EP 3 034 992 A2).
- les systèmes de scanner à lumière infrarouge. Ce procédé et un dispositif a été décris par exemple dans la demande de brevet "Visual target tracking" (demande n°WO 2010/088032 A2).

Dans le cas de la technique de scanner 3D sans projection de motif lumineux, il y a par exemple les systèmes stéréoscopiques basés sur l'utilisation de deux systèmes de capture d'image, légèrement espacés et pointant vers la même scène. En analysant les légères différences entre les images des deux points de vue, il est possible de déterminer la distance de chaque point de l'image. Un procédé similaire peut être utilisé avec une ou plusieurs camera prenant plusieurs images, jusqu'à plusieurs centaines, du même objet selon plusieurs point de vue. On parle alors de photogrammétrie ou encore de stéréoscopie à vue multiples. Parmi les articles scientifiques traitant des méthodes de scanner 3D sans contact passif par traitement d'image, on relève essentiellement :
- les systèmes utilisant l'algorithme de "stéréoscopie à vues multiples" tel que décrit dans l'article "Progressive Prioritized Multi-view Stereo" de Alex Locher, Michal Perdoch et Luc Van Gool publié en 2016 à la conférence CVPR de Las Vegas, ou l'article "Depth from Gradients in Dense Light Fields for Object Reconstruction" de Kaan Yücel, Chandail Kim, Alexander Sorkine-Hornung et Olga Sorking-Hornung publié en 2016 à la conférence internationale 3D Vision de l'IEEE.
- les systèmes utilisant l'algorithme dit "structure from motion" tel que décrit dans l'article "Progressive 3D Modeling All the Way" de Alex Locher, Michal Havlena et Luc Van Gool publié en 2016 à la conférence internationale 3D Vision de l'IEEE.

Parmi les brevets traitant des procédés et dispositifs de scanner 3D sans contact passif par traitement d'image, on relèvera la demande brevet "Stereo distance measurement apparatus and measurement method" (demande n°EP 2 597 421 A1), la demande de brevet "Procédé et dispositif destinés à la numérisation en 3D d'un objet" (demande n°EP 2 144 036 A2), la demande de brevet "Procédé de numérisation en 3D d'un objet doté d'une surface variable" (demande n°EP 2 420 797 A2).

Les dispositifs et procédés connus décrits précédemment permettent la formation d'une maquette virtuelle en trois dimensions d'un objet par des mesures 3D sans contact, mais présentent plusieurs désavantages. En effet les procédés de scanner 3D avec projection de lumière structurée, de laser ou d'infrarouge permettent une reconstitution dite dense, mais représentent un coût important à cause du matériel inhérent au dispositif de projection de lumière. Et en ce qui concerne les procédé de scanner 3D sans contact passif tel que la stéréoscopie à multiple vue, il faut générer un grand nombre de point de vue pour obtenir un résultat satisfaisant. Seulement l'appariement des images et le calcul algorithmique des coordonnées des points de la surface de l'objet peut-être extrêmement lourd, complexe et long. De plus, ces procédés souffrent souvent du manque de précision pour le calcul des positions et orientations depuis lesquelles les images ont été prises. Ils souffrent également de la difficulté à distinguer nettement dans l'image, la silhouette de l'objet de l'environnement dans lequel l'image a été prise. Cela a souvent pour conséquence que l'environnement immédiat est lui aussi numérisé en 3D et entraine un travail de retouche supplémentaire pour l'utilisateur via l'utilisation de logiciel de conception assistée par ordinateur.

Dans ce contexte, l'inventeur a déterminé qu'il serait particulièrement avantageux de pouvoir utiliser un téléphone intelligent (smartphone) ou une tablette numérique comme scanner pour numériser en 3D un objet et d'avoir un procédé qui simultanément soit extrêmement simple à utiliser, grandement automatisé, ne nécessite pas de réglage complexe informatique ou photographique de l'utilisateur, peu couteux, précis. Les smartphones et tablettes numériques sont devenus monnaie courante et la plupart des gens en sont équipés de nos jours. Ils ont l'avantage d'être souvent équipés d'une optique et d'un capteur photo de bonne qualité ainsi que d'un processeur puissant. Il serait efficace et peu couteux d'effectuer une numérisation de qualité en trois dimensions d'un objet à l'aide d'une application logicielle installée sur le smartphone en prenant une pluralité de prises de vues selon différents points de vue, ou d'une vidéo, autour de l'objet à numériser. Cela serait possible si un procédé et un dispositif permettaient d'aisément calculer précisément la position de l'appareil lors de chaque prise de vue et de d'obtenir facilement pour chaque image une silhouette précise de l'objet à numériser.

L'invention vise donc à proposer un tel dispositif. Elle vise également à proposer un procédé de numérisation en trois dimensions d'un objet à l'aide d'un tel dispositif. Elle vise plus particulièrement à proposer un tel dispositif et un tel procédé qui peuvent être mis en oeuvre par des utilisateurs non spécialistes dans le domaine de l'informatique ou de la numérisation en trois dimensions. Elle vise à ce titre à proposer un tel dispositif et un tel procédé dont le fonctionnement photographique, algorithmique et informatique est simple de sorte que l'utilisateur n'a qu'à poser l'objet à numériser sur une surface plane faisant parti du dispositif et qu'à prendre des photos ou filmer l'objet à numériser en trois dimensions pour obtenir après traitement la numérisation de l'objet.

Pour ce faire, l'invention concerne un dispositif permettant de calculer la position et l'orientation du point de vue de l'appareil pour chaque image prise, ainsi que d'obtenir la silhouette de l'objet à numériser en trois dimensions ce qui permet de distinguer, dans une image, la zone où se trouve l'objet de la zone où il n'est pas. Et par conséquence ce dispositif permet, par projection en perspective dans l'espace de la silhouette de l'image où se trouve l'objet, de distinguer un volume dans lequel l'objet est inclus d'un volume dans lequel l'objet ne peux pas être. L'intersection des volumes où l'objet peut se trouver pour différents points de vues permet de définir une zone précise où l'objet se trouve. Ce dispositif est caractérisé en ce qu'il comprend une surface plane d'au moins deux teintes chromatiques permettant de facilement distinguer dans une image, l'objet à numériser posé sur cette surface de la surface en elle-même et donc d'obtenir une silhouette dudit objet. Cette technique dite de "chromakey" est utilisée dans l'industrie vidéo pour distinguer une scène filmée d'un fond bleu ou vert. Ce dispositif est caractérisé également en ce que les deux teintes chromatiques de cette surface forment un motif qui permet :
- de calibrer la camera de l'appareil qui prend les images de l'objet, dans le sens que ledit motif permet de calculer l'ouverture du champ de vision de la camera ainsi que la possible distorsion de l'image due au dispositif optique de cette camera.
- de calculer la position et l'orientation précises de la caméra par rapport à la surface plane et donc par rapport à l'objet posé sur la surface.

L'invention s'étend également à un procédé de numérisation en trois dimensions, à l'aide du dispositif, d'un objet posé sur ledit dispositif. Le procédé est caractérisé en ce qu'il comporte les étapes suivantes :
- l'objet à numériser est posé sur un dispositif servant de support
- la réalisation simultanée ou séquentielle d'une pluralité de prises de vues selon différents points de vue de l'objet à numériser posé sur le dispositif servant de support à l'aide d'un ou plusieurs appareils comportant une camera, chaque image créée servant aux étapes suivantes
- détection de la zone de support dans l'image issue de chaque prise de vue
- détection de la silhouette de l'objet dans ladite zone du support par différence chromatique entre l'objet et les teintes du support
- détection, dans ladite zone du support dans l'image, du positionnement d'un motif prédéfini composé par les différences de teintes du support
- calcul à l'aide dudit positionnement du motif prédéfini, de la position et de l'orientation de ladite prise de vue par rapport à l'objet
- utilisation de ladite silhouette de l'objet ainsi que de ladite position et de ladite orientation de la prise de vue, pour estimer un volume dans lequel ledit objet peut se se situer
- ledit volume ainsi que lesdites silhouettes, ladite pluralité de prises de vues, leurs, positions et orientations sont utilisées comme donnée d'entrée d'un ou plusieurs algorithmes de traitement d'image pour reconstituer une maquette numérique tridimensionnelle dudit objet à numérisé posé sur ledit dispositif.

Avec un tel dispositif et un tel procédé selon l'invention, il est possible d'obtenir une numérisation tridimensionnelle de bonne qualité d'un objet posé sur sur ledit dispositif à l'aide d'une pluralité de prises de vues faites par un appareil tel qu'un smartphone, ceci pour un coût bien plus faible pour l'utilisateur par rapport aux autres techniques de l'état de l'art.

Par ailleurs, avantageusement le dispositif et le procédé selon l'invention sont compatibles avec les techniques de scanner 3D utilisant un laser ou de la lumière structurée. En effet ils permettraient d'améliorer la précision de la numérisation tridimensionnelle et de diminuer la complexité de calcul inhérente à la numérisation car le dispositif permet de distinguer la zone où se trouve ledit objet dans une prise de vue.

D'autres avantages buts et caractéristiques de la présente invention ressortent de la description détaillée qui suit, fait à titre d'exemple non limitatif, au regard des dessins annexés dans lesquels :
- la figure 1 illustre un objet à numériser (1) posé sur le dispositif (2), qui est une surface plane avec un exemple de motif prédéfini (4), ainsi qu'une pluralité de prises de vues (3) permettant de numériser l'objet à l'aide d'une application logiciel
- la figure 2 illustre un objet à numériser (1) posé sur le dispositif, (2) qui est une surface plane avec un exemple de motif prédéfini (4), ainsi qu'un smartphone (5) et une image (6) prise selon le point de vue du smartphone ainsi que la projection en perspective (7) de la surface plane dans l'image prise par le smartphone. Cette figure illustre le calcul de la position et de l'orientation de la prise de vue par rapport à la surface plane
- la figure 3 représente schématiquement le principe de reconstruction numérique d'une surface (8) de l'objet à l'aide de la technique de photogrammétrie en se servant de points caractéristiques (11) situés dans les images (10) prises selon différentes prises de vues (3)
- la figure 4 représente schématiquement l'étape du procédé qui permet de déterminer le volume (13) où l'objet (1) peut être en projetant les silhouettes (11) de l'objet dans des images prises (10) depuis différentes prises de vues.
- la figure 5 illustre les principales étapes du procédé permettant la numérisation tridimensionnelle de l'objet en se servant du dispositif

Selon un mode de réalisation, le dispositif peut être une surface plane (2) sur laquelle on puisse poser l'objet à numériser (1). Cette surface plane peut être d'une matière quelconque, elle doit être de deux teintes chromatiques différentes telles que, par exemple, un vert pur, dans le sens que les composantes bleu ou rouge sont nulles, et un vert légèrement plus sombre. Ces deux teintes chromatiques pourraient aussi être un bleu pur et un bleu légèrement plus sombre. Les deux teintes forment un motif (4), composé d'un ensemble de formes caractéristiques, telles que des carrés, cercles, triangles, traits, courbes, et formes diverses.

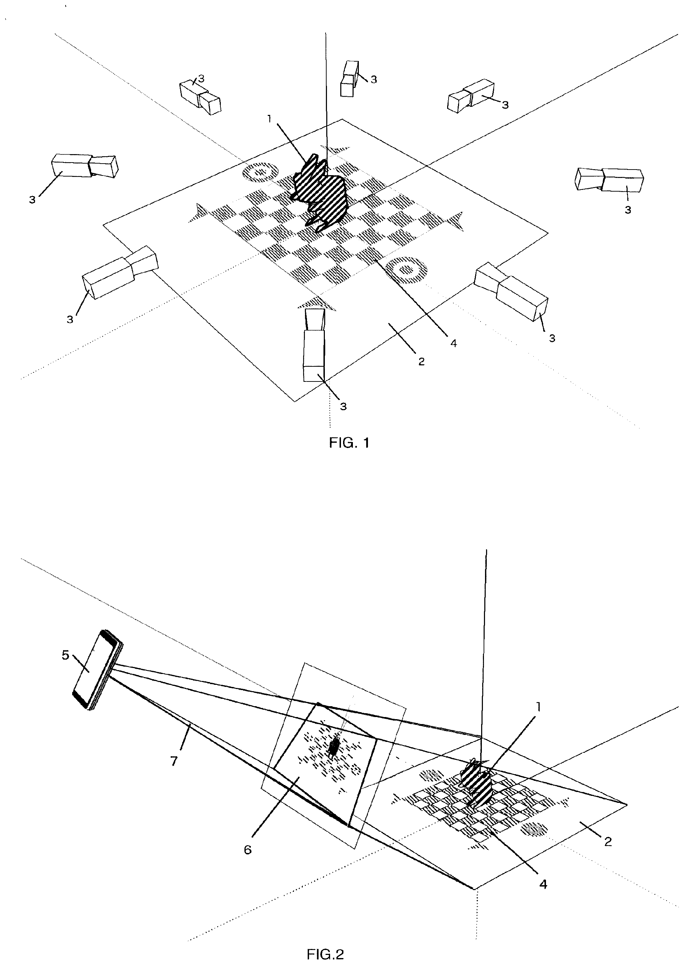

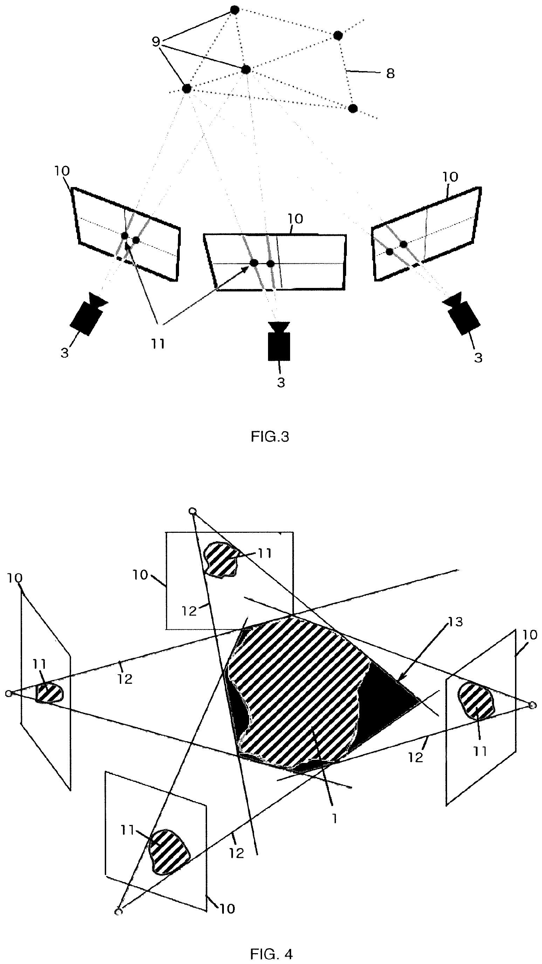

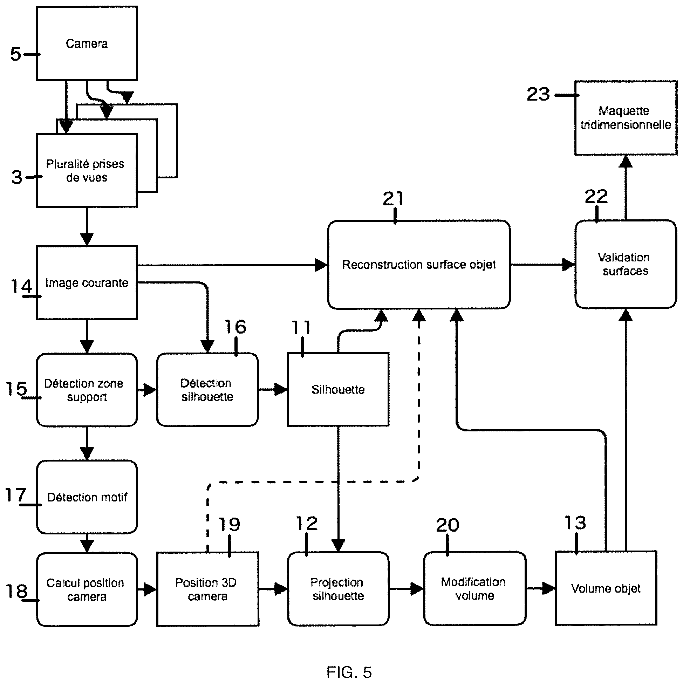

Selon un mode de réalisation, le procédé peut être réalisé avec une application logicielle installée sur un appareil tel qu'un smartphone (5) comportant une caméra permettant de filmer ou prendre des photos de l'objet à numériser (1) selon différentes prises de vues (3). Ladite application logicielle implémente les différentes étapes du procédé, telles que présenté dans la figure 5 :
- l'application permet d'utiliser la camera du smartphone (5) pour prendre des photos ou filmer l'objet à numériser (1) selon différents points de vue et donc réaliser une pluralité de prises de vues (3), tel qu'illustré dans la figure 1. A chaque prise de vue (3) correspond une image numérique en couleur (10)
- dans cette pluralité d'images, les images peuvent être traitées séquentiellement, l'image courante (14) est utilisée dans les les étapes suivantes :
- la détection (15) de la zone du support (2) dans l'image courante(14), cette étape peut être réalisée en prenant la plus grande zone verte, ou bleue selon la teinte choisie pour le support du dispositif, et correspondant à la forme du support
- la détection (16) de la silhouette (11) de l'objet à numériser (1) dans la zone du support, cette étape peut être réalisée en utilisant une technique dite de chromakey qui consiste à distinguer la zone dans dans l'image courante (14) qui n'est pas de la couleur du support.
- la détection (17) de la position du motif (4) du support (2) dans la zone du support, ce motif (4) étant prédéfini et donc connu par avance de l'application logicielle, il est possible de retrouver la position et la déformation géométrique dudit motif (4) en se servant d'un ensemble de points caractéristiques du motif (4) qui sont retrouvés dans l'image courante (14).
- le calcul (18) de la position et de l'orientation (19) en 3D de la camera de l'appareil (5) par rapport au support (2), cette étape peut être réalisée en calculant à partir des points caractéristiques du motif (4) retrouvés dans l'image prise (6) la projection en perspective (7) telle qu'illustré dans la figure 2.
- une étape da projection (12) de la silhouette (11) de l'objet à numériser (1) dans l'image courante (14) en utilisant la position et l'orientation (19) de la caméra de l'appareil (5) tel qu'illustré dans la figure 4, cette projection permet de déterminer par rapport à chaque prise de vue (3) un volume ou l'objet ne peut pas être qui est celui de projection de la zone du support (4) sans la silhouette (11)
- une étape de combinaison (20), tel qu'illustré dans la figure 4, des différentes projections (12) pour une pluralité d'images (10) prises selon différents points de vue, permet d'obtenir un volume (13) dans l'espace où l'objet à numériser (1) peut se trouver
- une étape (21) de traitement algorithmique pour reconstituer plus finement la surface de l'objet à numériser en se servant de plusieurs images (10) issues des prises de vues (3), de leur silhouettes (11) correspondantes, des positions et orientations (19) 3D des points de vues correspondant, ainsi que du volume (13) dans l'espace où l'objet à numériser (1) peut se trouver. Une partie de cette étape est illustrée par la figure 3, des points caractéristiques (11) de la surface (8) de l'objet sont retrouvés dans différentes images (10) issues des prises de vues (3). Comme la position et l'orientation (19) de la caméra de l'appareil (5) ont été calculés dans une étape précédente pour chaque image (10), il est possible par projection en perspective des points caractéristiques (11) identiques entre plusieurs images (10) de calculer la position 3D précise de points (9) correspondant à la surface de l'objet à numérisé (1). Cette étape est avantageusement simplifiée car pour chaque image (10), il n'est nécessaire de considérer que la zone de la silhouette (11) pour la recherche des points caractéristiques. Cette étape est également avantageusement simplifiée car l'espace dans lequel peuvent se situer les points (9) de la surface (8) de l'objet à numériser (1) est limité au volume (13) dans lequel l'objet peut se trouver.
- une étape (22) de validation et affinage des surfaces calculées à l'étape précédente pour reconstituer l'enveloppe globale numérique de l'objet à numériser(1). Cette enveloppe numérique peut-être constituée d'une multitude de points 3D avec leurs coordonnées, leurs couleurs, leurs liens entre eux, et des textures des surfaces formées par ces points. Il résulte de cette étape (22) une maquette numérique tridimensionnelle (23) de l'objet à numériser (1).

L'invention est évidemment susceptible d'application industrielle car une application logicielle implémentant le procédé, serait disponible pour le grand publique et pourrait être déployée sur des millions de smartphones à travers le mondes. Le dispositif pourrait être fabriqué en grande série et être utilisé dans le monde par des millions d'utilisateurs ayant préalablement installé l'application logicielle sur leur smartphone.

## Revendications

1. Procédé de numérisation en trois dimensions d'un objet **caractérisé en ce qu'**il comporte les étapes suivantes :
- l'objet à numériser est posé sur un dispositif servant de support
- la réalisation simultanée ou séquentielle d'une pluralité de prises de vues selon différents points de vue de l'objet à numériser posé sur le dispositif servant de support à l'aide d'un ou plusieurs appareils comportant une caméra, chaque image créée servant aux étapes suivantes
- détection de la zone de support dans l'image issue de chaque prise de vue
- détection de la silhouette de l'objet dans ladite zone du support par différence chromatique entre l'objet et les teintes du support
- détection, dans ladite zone du support dans l'image, du positionnement d'un motif prédéfini composé par les différences de teinte du support
- calcul à l'aide dudit positionnement du motif prédéfini, de la position et de l'orientation de ladite prise de vue par rapport à l'objet
- utilisation de ladite silhouette de l'objet ainsi que de ladite position et de ladite orientation de la prise de vue, pour estimer un volume dans lequel ledit objet peut se se situer
- ledit volume ainsi que lesdites silhouettes, ladite pluralité de prises de vues, leurs, positions et orientations sont utilisées comme donnée d'entrée d'un ou plusieurs algorithmes de traitement d'image pour reconstituer une maquette numérique tridimensionnelle dudit objet à numérisé posé sur ledit dispositif.
Le dispositif permettant de mettre en oeuvre les étapes du procédé est **caractérisé en ce qu'**il comprend une surface plane d'au moins deux teintes chromatiques permettant de facilement distinguer dans une image, l'objet à numériser posé sur cette surface de la surface en elle-même et donc d'obtenir une silhouette dudit objet, et également **en ce que** les deux teintes chromatiques de cette surface forment un motif qui permet :
- de calibrer la camera de l'appareil qui prend les images de l'objet, dans le sens que ledit motif permet de calculer l'ouverture du champ de vision de la camera ainsi que la possible distorsion de l'image due au dispositif optique de cette camera.
- de calculer la position et l'orientation précises de la caméra par rapport à la surface plane et donc par rapport à l'objet posé sur la surface.
Cette surface plane peut être d'une matière quelconque, elle doit-être de deux teintes chromatiques différentes telles que un vert pur, dans le sens que les composantes bleu ou rouge sont nulles, et un vert légèrement plus sombre. Ces deux teintes chromatiques pourraient aussi être un bleu pur et un bleu légèrement plus sombre.
